# EUROPÄISCHE PATENTSCHRIFT

(11) **EP 3 927 988 B1**
(45) Veröffentlichungstag und Bekanntmachung des Hinweises auf die Patenterteilung: **12.07.2023**
(21) Anmeldenummer: 20710801.0
(22) Anmeldetag: 27.02.2020
(51) Int. Cl.: F16D 3/2233, F16D 3/2237, F16D 3/224

(54) **GLEICHLAUFDREHGELENK**
CONSTANT VELOCITY SWIVEL JOINT
JOINT HOMOCINÉTIQUE

(30) Priorität: 28.02.2019 DE 102019105195
(43) Veröffentlichungstag der Anmeldung: 29.12.2021
(73) Patentinhaber: Neapco Intellectual Property Holdings, LLC, Farmington Hills, MI 48331 (US)
(72) Erfinder: KRINGS, Dominik, 52396 Heimbach-Vlatten (DE); ARISTONDO ARRIZABALAGA, Juan Agustin, 20800 Zarautz Gipuzkoa (ES)
(74) Vertreter: Lohmanns, Bernard
(86) Internationale Anmeldenummer: PCT/EP2020/055153
(87) Internationale Veröffentlichungsnummer: WO 2020/174050

(56) Entgegenhaltungen:
- WO-A1-2006/048032
- DE-A1-102004 006 225
- DE-T5-112006 004 069
- US-A1- 2011 212 789

## Beschreibung

Die Erfindung betrifft ein Gleichlaufdrehgelenk zur Drehmomentübertragung gemäß dem Oberbegriff des Anspruchs 1.

Ein Gleichlaufdrehgelenk ist eine mechanische Kupplung, die zwei Wellen miteinander verbindet, wobei die Drehgeschwindigkeit einer Ausgangsweile unabhängig vom Beugewinkel des Gelenks gleich der Drehgeschwindigkeit einer Eingangswelle ist. Ein Gleichlaufdrehgelenk weist dabei ein Gelenkaußenteil mit mehreren äußeren Kugelbahnen, ein Gelenkinnenteil mit mehreren inneren Kugelbahnen und drehmomentübertragende Kugeln auf, die jeweils in Bahnpaaren aus äußeren Kugelbahnen und inneren Kugelbahnen geführt sind. Ferner ist ein Käfig vorgesehen, der die Kugeln in Käfigfenstern aufnimmt und bei gestrecktem Gleichlaufdrehgelenk in einer gemeinsamen Gelenkmittelebene hält. Bei Abwinkelung des Gelenks hält der Käfig die Kugeln in der homokinetischen Ebene (winkelhalbierende). Eine sphärische Außenfläche des Käfigs liegt dabei mit Spiel an einer sphärischen Innenfläche des Gelenkaußenteils an, während eine sphärische Innenfläche des Käfigs mit Spiel an einer sphärischen Außenfläche des Gelenkinnenteils anliegt, um so ein freies Schwenken des Käfigs zwischen den beiden Gelenkteilen zu ermöglichen.

Dokument US 2011/212789 A1 offenbart einen Gleichlaufdrehgelenk zur Drehmomentübertragung, aufweisend: ein Gelenkaußenteil (1) mit mehreren äußeren Kugelbahnen (11b, 12b), ein Gelenkinnenteil (2) mit mehreren inneren Kugelbahnen (21b,22b), drehmomentübertragende Kugeln (3), die jeweils in Bahnpaaren aus äußeren Kugelbahnen (11b, 12b) und inneren Kugelbahnen (21b,22b) geführt sind, und einen Käfig (4), der die Kugeln (3) in umfangsverteilten Käfigfenstern aufnimmt und bei gestrecktem Gleichlaufdrehgelenk in einer gemeinsamen Gelenkmittelebene hält.

Vor diesem Hintergrund war es die Aufgabe der Erfindung, ein Gleichlaufdrehgelenk bereitzustellen, bei dem das Verhältnis aus Drehmomentübertragung zu Bauvolumen möglichst groß ist und das insbesondere hinsichtlich Laufruhe und Wirkungsgrad verbessert ist. Insbesondere unter hohen Gelenkwinkeln (über 50°, z.B. 54°) soll ein möglichst hohes Drehmoment übertragbar sein.

Erfindungsgemäß wird diese Aufgabe durch ein Gleichlaufdrehgelenk gemäß dem unabhängigen Anspruch 1 gelöst. Vorteilhafte Weiterbildungen des Gelenks ergeben sich aus den Unteransprüchen 2-12.

Das erfindungsgemäße Gleichlaufgelenk weist ein, üblicherweise topfförmiges, Gelenkaußenteil auf, das eine erste Längsachse und axial zueinander entgegengesetzt liegend eine erste Anschlussseite und eine Öffnungsseite hat und das auf seiner Innenumfangsfläche äußere Kugelbahnen aufweist. Beispielsweise ist die Anschlussseite als Wellenzapfen oder zur Aufnahme eines Wellenzapfens ausgebildet. Das Gleichlaufgelenk weist ferner ein Gelenkinnenteil auf, das eine zweite Längsachse und auf seiner Außenumfangsfläche innere Kugelbahnen aufweist. Üblicherweise ist das Gelenkinnenteil in das durch das Gelenkaußenteil ausgebildete Hohlvolumen eingesetzt. Erfindungsgemäß sind mehrere Kugeln zur Drehmomentübertragung zwischen Gelenkaußenteil und Gelenkinnenteil vorgesehen. Nicht zwingend aber bevorzugt handelt es sich um Kugeln gleicher Abmessung, Erfindungsgemäß ist ferner ein zwischen Gelenkinnenteil und Gelenkaußenteil angeordneter Kugelkäfig vorgesehen mit mehreren in einer Umfangsrichtung verteilten Käfigfenstern, in denen die Kugeln geführt sind. Dieser Käfig ist insbesondere ringförmig ausgeführt.

Gelenkinnenteil und Gelenkaußenteil sind so angeordnet, dass jeweils eine äußere Kugelbahn des Gelenkaußenteils und eine innere Kugelbahn des Gelenkinnenteils unter Ausbildung eines Bahnpaares sich gegenüberliegen, wobei in jeder Bahnpaarung eine der Kugeln aufgenommen ist. Der mögliche Weg der Mittelpunkte der Kugeln in den Kugelbahnen eines Bahnpaares ist jeweils als Mittellinie der jeweiligen Kugelbahn definiert. Dabei läuft eine Kugel bei gebeugtem Gelenk jeweils entlang einer oder mehrerer äußerer Kontaktlinien in der äußeren Kugelbahn und entlang einer oder mehrerer inneren Kontaktlinien in der inneren Kugelbahn ab. Eine Kugelkontaktlinie, auch nachfolgend kurz Kontaktlinie genannt, kann dabei entlang des jeweiligen Bahngrundes aber auch entlang beider Flanken oder einer der Flanken verlaufen. Beispielsweise kann der Querschnitt der Kugelbahnen gotisch oder elliptisch sein, oder einem Teilkreis entsprechen. Die von den Kugeln beschriebene Bewegung in den Kugelbahnen wird nachfolgend anhand ihrer jeweiligen Mittellinien beschrieben, welche die Abrollbewegung des Kugelmittelpunkts einer auf der jeweiligen Kugelbahn abrollenden Kugel beschreiben, und somit unter Vernachlässigung eines erforderlichen Spiels für die Kugeln die Aussagen bezüglich der jeweiligen Mittellinie entsprechend für die Kontaktlinie gelten.

Somit liegen eine äußere und eine innere Mittellinie eines Bahnpaares vor, die letztlich das von der Geometrie der Kugelbahn bestimmte Abrollverhalten der Kugeln widerspiegeln. Die Mittellinien der äußeren und inneren Kugelbahnen eines Bahnpaares sind so aufeinander abgestimmt, dass sie bei gestrecktem Gelenk im Wesentlichen spiegelsymmetrisch bezüglich der Gelenkmittelebene sind. Dies gilt unter Vernachlässigung des in der Praxis notwendigen Spiels zwischen den beweglichen Gelenkpartnern. Beabsichtigte leichte Abweichungen von der Spiegelsymmetrie sind jedoch ebenfalls möglich.

Das erfindungsgemäße Gleichlaufdrehgelenk weist unterschiedliche Arten von Bahnpaaren aus Kugelbahnen auf, bei denen diese Mittellinien unterschiedlich ausgeformt sind. Erfindungsgemäß ist vorgesehen, dass eine erste Art von Bahnpaaren aus Kugelbahnen so ausgebildet ist, dass Krümmungsmittelpunkte der Mittellinien der Kugelbahnen bei gestrecktem Gelenk in der Gelenkmittelebene liegen. Es handelt sich somit um zumindest teilweise konzentrisch verlaufende Kugelbahnen, die über den gesamten Beugewinkelbereich einen hohen Umschlingungswinkel haben und damit eine hohe Drehmomentübertragung bewirken.

Ferner ist eine zweite Art von Bahnpaaren aus Kugelbahnen so ausgebildet, dass ihre Mittellinien wenigstens zwei Abschnitte aufweisen, die unterschiedlich ausgeformt sind. Dabei weist die jeweilige Mittellinie der äußeren Kugelbahnen der zweiten Art von Bahnpaaren wenigstens einen Innenabschnitt und einen Außenabschnitt auf, wobei der Innenabschnitt auf der Anschlussseite des Gelenkaußenteils liegt, während der Außenabschnitt auf der Öffnungsseite des Gelenkaußenteils liegt. Der Innenabschnitt ist gekrümmt und der Krümmungsmittelpunkt dieses Innenabschnitts liegt bei gestrecktem Gelenk innerhalb des Hohlvolumens des Gelenkaußenteils zur Öffnungsseite hin versetzt zur Gelenkmittelebene, während sich die Mittellinie durch den Außenabschnitt zur Öffnungsseite hin aufweitet.

Für eine Aufweitung der Mittellinie zur Öffnungsseite hin kann der Außenabschnitt auf verschiedene Arten ausgebildet sein. In einer Ausführungsform der Erfindung weitet sich die Mittellinie beispielsweise durch den Außenabschnitt linear auf. In einer weiteren Ausführungsform der Erfindung ist vorgesehen, dass die wenigstens zwei Abschnitte der Mittellinie in entgegengesetzte Richtungen gekrümmt sind. Insbesondere liegt der Krümmungsmittelpunkt des Außenabschnitts außerhalb des Hohlvolumens des Gelenkaußenteils. Vorzugsweise liegt er dabei ebenfalls versetzt zur Gelenkmittelebene, und zwar insbesondere versetzt zur Öffnungsseite hin. So bildet sich bei der zweiten Art von Bahnpaaren ein S-förmiger Verlauf der Kugelbahnen aus.

Der Öffnungswinkel α der zweiten Art von Bahnpaaren öffnet zur Öffnungsseite des Gelenkaußenteils hin. Der Öffnungswinkel ist dabei definiert als Winkel zwischen Tangenten an eine Kugel in ihren Berührpunkten mit den Kugelbahnen. Die Kugelbahnen der zweiten Art von Bahnpaaren sind somit so ausgestaltet, dass die Kugeln bei einer Abwinkelung des Gelenks durch die Form ihrer Kugelbahnen in die Symmetrieebene gesteuert werden. Hierzu liegt der Krümmungsmittelpunkt wenigstens eines Abschnitts der Kugelbahnen nicht in der Symmetrieebene des Gelenks, sondern versetzt zu dieser. So gesteuerte Kugeln sind vorteilhaft, um unter kleinen Beugewinkeln eine ausreichende Steuerung der Kugeln im Gelenk sicherzustellen. Beim Antrieb unter großen Beugungswinkeln, insbesondere von über 50°, führt dies zwar dazu, dass der Umschlingungswinkel im äußeren Bereich der Kugelbahnen nur gering ist. Neben solchen Kugeln mit Steuerfunktion werden jedoch erfindungsgemäß auch die beschriebenen Kugeln in wenigstens teilweise konzentrisch verlaufenden Kugelbahnen eingesetzt. Diese sozusagen neutralen Kugeln belasten den Käfig nicht axial und haben über den gesamten Beugungswinkelbereich einen großen Umschlingungswinkel. Durch die Kombination beider Arten von Kugelbahnen können die Vorteile beider Kugelbahnen genutzt werden. Durch die erste Art der neutralen Bahnpaare kann die mangelnde Umschlingung und die geringe mechanische Standfestigkeit der steuernden Bahnpaarung zweiter Art im gebeugten Zustand des Gelenks kompensiert werden.

Gleichzeitig ermöglicht die erfindungsgemäß vorgesehene Aufweitung, insbesondere S-Form, der zweiten Art von Kugelbahnen eine höhere Gelenkbeugung als dies bei Kugelbahnen der Fall ist, die lediglich einen einzelnen Krümmungsabschnitt aufweisen, dessen Mittelpunkt versetzt zur Gelenkmittelebene liegt. Die sich bei Gelenkbeugung zur Gelenköffnung hin bewegenden Kugeln können über einen größeren Beugebereich noch in den Kugelbahnen geführt werden und zur Drehmomentübertragung beitragen.

Insgesamt betrachtet kann somit bei einem Gleichlaufdrehgelenk mit hohem Beugewinkel das Verhältnis aus Drehmomentübertragungskapazität und Bauraum maximiert werden. Durch die Axialkraftneutralität der Kugeln in der ersten Art von Bahnpaaren (neutrale Kugeln) werden die Reibungsverluste zwischen den Komponenten reduziert. Diese Kugeln unterliegen einer reinen Rollbewegung. Die Steuerung des Käfigs (somit auch der homokinetischen Ebene der Kugeln) bei kleinen Beugewinkeln erfolgt durch die Kugeln in der zweiten Art von Bahnpaaren (gesteuerte Kugeln). Mit steigendem Beugewinkel unterstützen auch die neutralen Kugeln aufgrund der Verschränkung ihrer Kugelbahnen unter Abwinkelung teilweise die Steuerung. Ein frühes Freistellen der Kugeln beim Ausfahren unter hohen Beugewinkeln kann aufgrund der hohen Anzahl von Kugeln, die im Eingriff verbleiben, in Kauf genommen werden.

Die Krümmungsradien der Mittellinien der verschiedenen Kugelbahnen werden entsprechend gewählt. In einer Ausführungsform der Erfindung liegt bei der Mittellinie einer äußeren Kugelbahn der zweiten Art von Bahnpaaren das Verhältnis eines Krümmungsradius des Innenabschnitts zum Durchmesser D_{Kugel} einer zugehörigen Kugel beispielsweise zwischen 1,5 und 2,5. Ferner liegt bei einer solchen Mittellinie das Verhältnis eines Krümmungsradius des Außenabschnitts zum Durchmesser D_{Kugel} einer zugehörigen Kugel beispielsweise zwischen 1,0 und 10.

In einer weiteren Ausführungsform der Erfindung liegt das Verhältnis eines Krümmungsradius der Mittellinien der ersten Art von Bahnpaaren zum Durchmesser D_{Kugel} einer zugehörigen Kugel beispielsweise zwischen 1,5 und 2,5.

Vorzugsweise ist eine gleiche Anzahl von Bahnpaaren beider Arten vorgesehen und die Bahnpaare beider Arten wechseln sich über den Umfang ab. Insbesondere ist die Anzahl der Kugeln daher gerade, so dass neutrale und gesteuerte Kugeln alternierend angeordnet sind. Bevorzugt beträgt die Anzahl von Kugeln wenigstens acht bzw. genau acht. So können vier gesteuerte Kugeln und vier neutrale Kugeln jeweils in einem Winkel von etwa 90° zueinander angeordnet werden. Wenigstens drei gesteuerte Kugeln in einer solchen Anordnung ermöglichen eine verlässliche Steuerung des Gelenks. Es besteht daher auch die Möglichkeit, insgesamt sechs Kugeln vorzusehen, d.h. alternierend drei neutrale Kugeln in Bahnpaaren der ersten Art und drei steuernde Kugeln in Bahnpaaren der zweiten Art.

In einer Ausführungsform der Erfindung weisen die gegenläufig gekrümmten Abschnitte der Mittellinien der Kugelbahnen der zweiten Art von Bahnpaaren weitere Abschnitte auf, die sich an diese gekrümmten Abschnitte anschließen. Es muss sich somit nicht um eine reine S-Form der Kugelbahnen handeln, sondern die S-Form kann auch durch mehr als zwei Abschnitte mit unterschiedlicher Krümmung gebildet sein. Diese weiteren Abschnitte können linear oder gekrümmt ausgeformt sein.

Die Ausrichtung der Kugelbahnen bezüglich der zugehörigen Längsachse eines Gelenkteils kann unterschiedlich sein. Denkbar ist eine Schrägstellung der Kugelbahnen bezüglich der Längsachse, wobei beispielsweise die Schrägstellung der inneren Mittellinien der der äußeren Mittellinien entgegengesetzt ist, so dass sich das Gelenk als zur Art der Cross-Groove-Gelenke gehörig qualifizieren würde. Bevorzugt sind die Kugelbahnen jedoch jeweils in Radialebenen angeordnet. Ferner kann das erfindungsgemäße Gelenk als Festgelenk oder Verschiebegelenk ausgeführt sein.

Gemäß einer Ausgestaltung der Erfindung ist vorgesehen, dass für die zweite Art der Bahnpaare und für eine zugehörige, sich entlang des Verlaufs der jeweiligen äußeren und inneren Mittellinie bewegende Kugel bei maximal gebeugtem, sich drehendem Gelenk der zugehörige Öffnungswinkel α die jeweilige, prinzipielle Richtung seiner Öffnung beibehält. Anders ausgedrückt: Für die zweite Art der Bahnpaare öffnet sich der zugehörige Öffnungswinkel für alle möglichen, aber grundsätzlich von der Beugungsstellung des Gelenks abhängigen Lagen des Schnittpunktes der äußeren und inneren Mittellinie, welcher die möglichen Lage der Kugel definiert, zur Öffnungsseite des Gelenkaußenteils hin.

Ferner ist gemäß einer weiteren Ausgestaltung vorgesehen, dass sich der Radius der neutralen, äußeren Kugelbahnen ebenfalls zur Öffnungsseite hin aufweitet. Die neutralen Kugelbahnen werden dann nicht durch einen einzelnen, konzentrisch angeordneten Radius gebildet, sondern auch diese Kugelbahnen können zusätzlich wenigstens einen Abschnitt mit einem anderen entgegengesetzten Krümmungsradius aufweisen. Folglich sieht eine Ausführungsform vor, dass die erste Art von Bahnpaaren aus Kugelbahnen so ausgebildet ist, dass die jeweilige Mittellinie der äußeren Kugelbahnen dieser ersten Art von Bahnpaaren wenigstens einen Innenabschnitt und einen Außenabschnitt aufweist, wobei der Innenabschnitt auf der Anschlussseite des Gelenkaußenteils liegt, während der Außenabschnitt auf der Öffnungsseite des Gelenkaußenteils liegt. Der Krümmungsmittelpunkt des Innenabschnitts liegt dann in der Gelenkmittelebene, während der Krümmungsmittelpunkt des Außenabschnitts außerhalb des Gelenkaußenteils liegt. Die konzentrische Krümmung kann sich in einer anderen Ausführungsform jedoch auch linear aufweiten, oder der Krümmungsmittelpunkt des sich aufweitenden Abschnitts liegt versetzt zu der Gelenkmittelebene innerhalb des Hohlvolumens des Gelenkaußenteils.

Weitere Vorteile, Besonderheiten und zweckmäßige Weiterbildungen der Erfindung ergeben sich aus den Unteransprüchen und der nachfolgenden Darstellung bevorzugter Ausführungsbeispiele anhand der Abbildungen.

Von den Abbildungen zeigt:
- Fig. 1: eine Frontansicht auf die Öffnungsseite einer Ausführungsform des erfindungsgemäßen Gleichlaufdrehgelenks in gestreckter Stellung;
- Fig. 2: eine Schnittansicht der Ausführungsform der Fig. 1 entlang der Schnittlinie E-E;
- Fig. 3: eine schematische Darstellung der Ausformung von Mittellinien von zwei Arten von Bahnpaaren in einem Gleichlaufdrehgelenk gemäß Fig. 2;
- Fig. 4: eine Frontansicht auf die Öffnungsseite des Gleichlaufdrehgelenks der Fig. 1 in abgewinkelter Stellung;
- Fig. 5: eine Schnittansicht des Gleichlaufdrehgelenks gemäß Fig. 4 entlang der Schnittlinie A-A;
- Fig. 6: eine Schnittansicht des Gleichlaufdrehgelenks gemäß Fig. 4 entlang der Schnittlinie C-C.

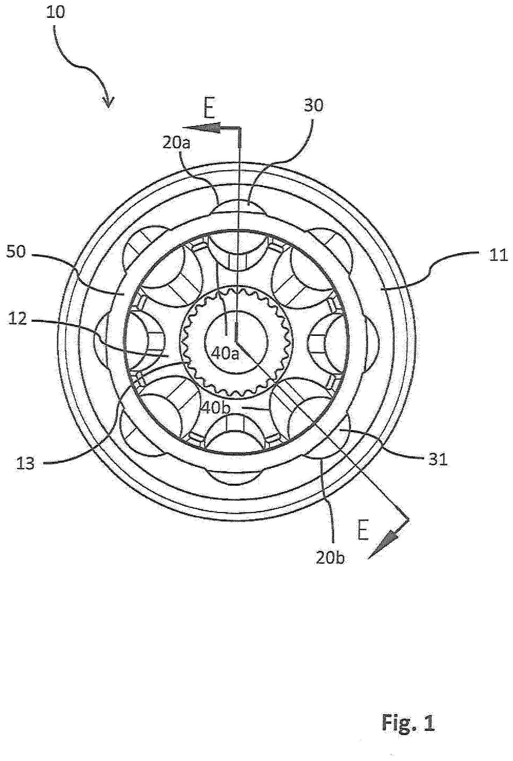

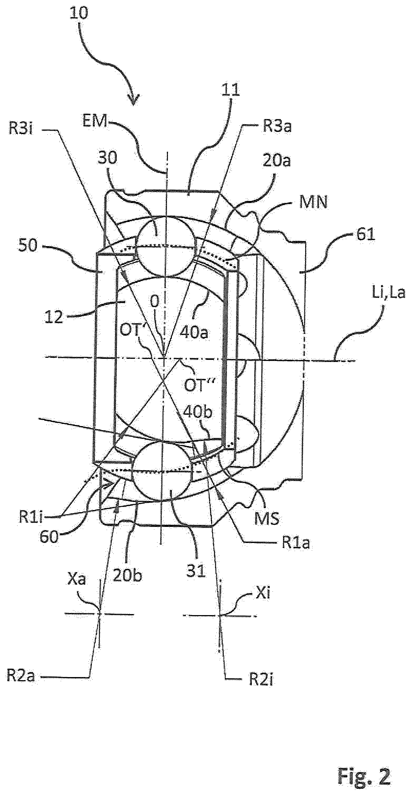

In der Fig. 1 und dem zugehörigen Längsschnitt E-E entlang der beiden Längsachsen La, Li des Gelenks der Fig. 2 ist eine Ausführungsform des erfindungsgemäßen Gleichlaufdrehgelenks 10 gezeigt. Dieses weist ein topfförmiges Gelenkaußenteil 11 und ein Gelenkinnenteil 12 auf. Zwischen dem Gelenkaußenteil 11 und dem Gelenkinnenteil 12 sind in Anzahl acht im Durchmesser gleiche Kugeln angeordnet, von denen beispielhaft zwei Kugeln mit den Bezugsziffern 30 und 31 bezeichnet sind. Diese Kugeln sind einerseits in äußeren Kugelbahnen 20a, 20b und andererseits in inneren Kugelbahnen 40a, 40b geführt, wobei ebenfalls nur die zugehörigen Kugelbahnen mit Bezugsziffern bezeichnet sind. Die äußeren Kugelbahnen 20a, 20b sind an einer Innenumfangsfläche des Gelenkaußenteils 11 ausgebildet und erstrecken sich von einer Öffnungsseite 60 zu einer Anschlussseite 61 des Gelenkaußenteils 11 hin. Das Gelenkaußenteil 11 bildet an seiner Anschlussseite 61 beispielsweise einen Wellenzapfen aus (nicht dargestellt).

Das in das vom Gelenkaußenteil 11 ausgebildete Hohlvolumen eingesetzte Gelenkinnenteil 12 bildet jeweils innere Kugelbahnen 40a, 40b aus, die den äußeren Kugelbahnen 20a, 20b paarweise unter Aufnahme jeweils einer Kugel 30, 31 gegenüberliegen. Das Gelenkinnenteil 12 bildet beispielsweise eine Achsaufnahme 13 aus, die jedoch in den Figuren 2, 5 und 6 zur Vereinfachung nicht gezeigt ist. Das Gelenkaußenteil 11 rotiert bei bestimmungsgemäßer Verwendung um eine erste Längsachse La und das Gelenkinnenteil 12 rotiert entsprechend um eine zweite Längsachse Li. Sämtliche durch räumliches Gegenüberliegen gebildeten Paarungen aus einer äußeren Kugelbahn 20a, 20b und einer inneren Kugelbahn 40a, 40b lassen sich aufgrund unterschiedlicher Formgebung der Kugelbahnen insbesondere in axialer Richtung in zwei Arten von Bahnpaaren einteilen, die nachfolgend als erste Art von Bahnpaaren 20a, 40a und als zweite Art von Bahnpaaren 20b, 40b bezeichnet werden. Die in der jeweiligen Art von Bahnpaaren angeordneten Kugeln werden lediglich aufgrund dieser Zugehörigkeit und nicht aufgrund eines konstruktiven Unterschieds unterschiedlich bezeichnet, wobei die zur ersten Art von Bahnpaaren 20a, 40a gehörige Kugel mit 30, die zur zweiten Art von Bahnpaaren 20b, 40b gehörige Kugel mit 31 bezeichnet ist.

Bei den Kugeln 30 handelt es sich um neutrale Kugeln in Bahnpaaren, deren Kugelbahnen einen Krümmungsmittelpunkt haben, der bei gestrecktem Gelenk in der Gelenkmittelebene EM liegt. Bei den Kugeln 31 handelt es sich um gesteuerte Kugeln in Bahnpaaren, deren Kugelbahnen aus wenigstens zwei Abschnitten bestehen, die in entgegengesetzte Richtungen gekrümmt sind, wobei der innere Abschnitt einer äußeren Kugelbahn 20b zur Öffnungsseite 60 hin versetzt zu der Gelenkmittelebene EM liegt. Ein äußerer Abschnitt weitet sich mit einem gegenläufigen Radius zur Öffnungsseite 60 hin auf.

Die Bahnpaare innerhalb einer Art unterscheiden sich nicht und sind pro Art gleichmäßig in Umfangsrichtung verteilt, hier um 90° versetzt zueinander auf der Innenumfangsfläche des Gelenkaußenteils 11 bzw. der Außenumfangsfläche des Gelenkinnenteils 12 angeordnet. Die Arten von Bahnpaaren sind über den Umfang alternierend angeordnet. Zwischen Bahnpaaren unterschiedlicher Art liegt daher ein Winkel von 45°. Der Schnitt E-E verläuft somit durch eine neutrale Kugel 30 und eine gesteuerte Kugel 31.

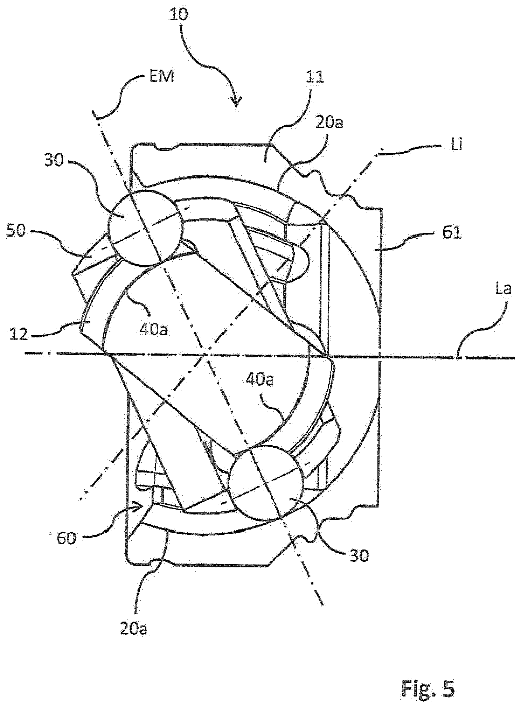

Die Kugeln 30, 31 werden in einem gemeinsamen Kugelkäfig 50 gehalten, wobei die Mittelpunkte der Kugeln 30, 31 in einer gemeinsamen Ebene, der sogenannten Gelenkmittelebene EM, gehalten werden, die bei gestrecktem Gelenk senkrecht zur ersten Längsachse La und zweiten Längsachse Li ist (siehe Fig. 2). Bei gebeugtem Gelenk 10, wie in der Figur 5 gezeigt, entspricht die Gelenkmittelebene EM einer winkelhalbierenden Ebene zwischen der ersten Längsachse La und der zweiten Längsachse Li. Eine sphärische Außenfläche des Käfigs 50 liegt dabei mit Spiel an einer sphärischen Innenfläche des Gelenkaußenteils 11 an, während eine sphärische Innenfläche des Käfigs 50 mit Spiel an einer sphärischen Außenfläche des Gelenkinnenteils 12 anliegt, um so ein freies Schwenken des Käfigs 50 zwischen den beiden Gelenkteilen 11, 12 zu ermöglichen.

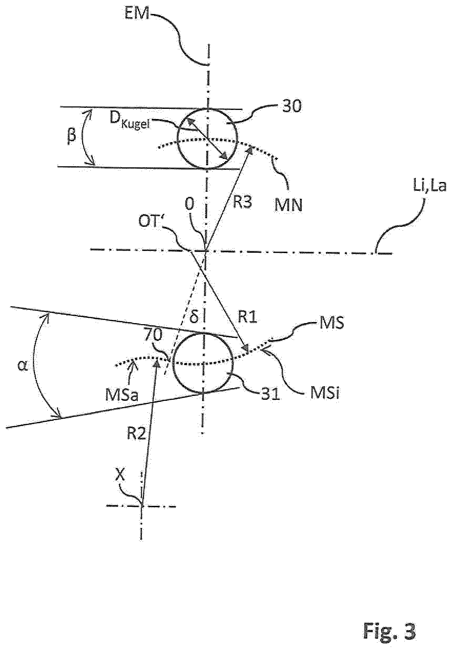

Der die Art von Bahnpaaren im Wesentlichen ausmachende konstruktive Unterschied soll anhand des Schnittbildes der Fig. 2 und der schematischen Darstellung der Fig. 3 deutlich gemacht werden, wobei sich das Gelenk jeweils in der gestreckten Stellung befindet, bei der die erste Längsachse La und die zweite Längsachse Li zur Deckung gebracht sind. Der Einfachheit halber aber ohne die Erfindung darauf zu beschränken wurde hierbei angenommen, dass die Kugeln 30, 31 jeweils auf einer Grundlinie der jeweiligen Kugelbahn abwälzen und somit in den Figuren der Verlauf der durch den Kugelmittelpunkt bestimmten Mittelinien MN, MS der äußeren Kugelbahnen um den Kugelradius parallel versetzt dem der jeweiligen Bahngrundlinie entspricht.

Anhand der Figuren 2 und 3 wird nachfolgend die Ausgestaltung der zur ersten Art von Bahnpaaren gehörigen äußeren Kugelbahn 20a und inneren Kugelbahn 40a näher erläutert. Die zur äußeren Kugelbahn 20a der ersten Art gehörige Kontaktlinie und die dazu parallel verlaufende Mittellinie MN sind durch konzentrische Kreisbahnen beschrieben, deren Kreismittelpunkt 0 auf der Gelenkmittelebene EM in deren Schnittpunkt mit der ersten Längsachse La und mit der zweiten Längsachse Li liegt. Für die Bahnpaare der ersten Art ist der Öffnungswinkel β folglich 0°. Aufgrund des konzentrischen, kreisförmigen Verlaufs der Mittellinie MN bleibt dieser Winkel über den Schwenkbereich im Betrag 0°. Anders ausgedrückt erfahren Kugeln 30, die dieser ersten Bahnpaarungsart zugehörig sind, keine Axialkräfte aufgrund der Krümmung der zugehörigen Kugelbahnen 20a, 40a, weder in der gestreckten Stellung, noch in der gebeugten Stellung des Gelenks 10. Auch auf diese Kugeln 30 können je nach Auslenkung des Gelenks Axialkräfte wirken, die jedoch durch die Bauform des Gelenks bedingt sind und nicht durch die spezifische Krümmung ihrer Kugelbahnen und den sich ergebenden Öffnungswinkel β. Beispielsweise wirken bei abgewinkeltem Gelenk axiale Kräfte auf Kugeln in Stellungen, in denen sich äußere und innere Kugelbahn verschränken.

Fig. 2 zeigt den Radius R3a der äußeren Kugelbahn 20a und den Radius R3i der inneren Kugelbahn 40a einer solchen neutralen Bahnpaarung mit konzentrischem Krümmungsradius. In der Fig. 3 ist hingegen nur die Mittellinie MN der äußeren Kugelbahn 20a gezeigt und ihr Radius R3 zum Gelenkmittelpunkt 0 angegeben.

Die neutralen Bahnen werden somit in dieser Ausführungsform durch einen einzelnen, zum Gelenkzentrum 0 konzentrisch angeordneten Radius R3 (R3i, R3a) erzeugt.

Bei steuernden Bahnpaarungen der zweiten Art mit Kugeln 31 bestehen die inneren und äußeren Kugelbahnen 20b, 40b, bzw. ihre Mittellinien, welche den Weg der Kugeln beschreiben, aus wenigstens zwei Abschnitten, die in dieser Ausführungsform entgegengesetzte Richtungen gekrümmt sind. Der Krümmungsradius des Außenabschnitts MSa kann jedoch auch unendlich sein, d.h. die Mittellinie MS weitet sich durch den Außenabschnitt MSa linear auf. In der Ausführungsform der Fig. 3 liegt der Krümmungsmittelpunkt OT' eines Innenabschnitts MSi der Mittellinie MS der äußeren Kugelbahn 20b versetzt zur Gelenkmittelebene EM und zwar liegt er zur Öffnungsseite 60 hin versetzt, vorzugsweise auf der Längsachse La. Der resultierende Radius R1 ist angegeben. Der Krümmungsmittelpunkt X eines Außenabschnitts MSa der Mittellinie MS der äußeren Kugelbahn 20b liegt außerhalb des Hohlvolumens des Gelenkaußenteils 11. Er liegt dabei ebenfalls versetzt zur Gelenkmittelebene EM und zwar liegt er zur Öffnungsseite 60 hin versetzt. Der resultierende Radius R2 ist angegeben.

Die Fig. 2 betrachtet dies bezüglich der äußeren und inneren Kugelbahnen 20b, 40b, wobei für die äußere Kugelbahn 20b der Radius R1a und der Radius R2a mit den zugehörigen Krümmungsmittelpunkten OT' und Xa angegeben sind. Das Gleiche gilt für die innere Kugelbahn 40b mit dem Radius R1i, dem Radius R2i und den zugehörigen Krümmungsmittelpunkten OT" und Xi.

Der Fig. 3 sind auch der Öffnungswinkel α der Kugelbahnen für die gesteuerten Kugeln 31, und der Öffnungswinkel β der Kugelbahnen für die neutralen Kugeln 30 zu entnehmen. Ferner verdeutlichen die Figuren 2 und 3, dass der tangentiale Übergang 70 zwischen der Krümmung des Innenabschnitts MSi und der Krümmung des Außenabschnitts MSa vorzugsweise relativ nahe zur Öffnung 60 liegt. Der Winkel δ zwischen der Gelenkmittelebene EM und einer Linie zwischen dem Gelenkmittelpunkt 0 und diesem tangentialen Übergang bzw. Umschlagpunkt 70 ist vorzugsweise größer als 8°. Insbesondere liegt er zwischen 16° und 18°, besonders bevorzugt bei etwa 17°. Die Radien R1 und R2 werden hierfür entsprechend gewählt, um einen möglichst späten Umschlag zu bewirken.

In einer Ausführungsform liegt das Verhältnis eines Krümmungsradius R1 des Innenabschnitts MSi zum Durchmesser D_{Kugel} einer zugehörigen Kugel 31 beispielsweise zwischen 1,5 und 2,5. Das Verhältnis eines Krümmungsradius R2 des Außenabschnitts MSa zum Durchmesser D_{Kugel} einer zugehörigen Kugel 31 liegt beispielsweise zwischen 1,0 und 10. Ferner liegt das Verhältnis eines Krümmungsradius R3 der Mittellinien MN der ersten Art von Bahnpaaren zum Durchmesser D_{Ku-gel} einer zugehörigen Kugel 30 beispielsweise zwischen 1,5 und 2,5.

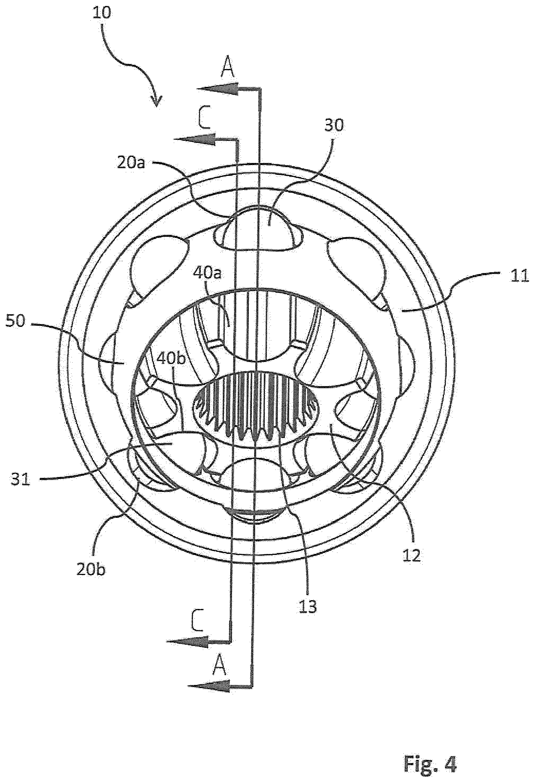

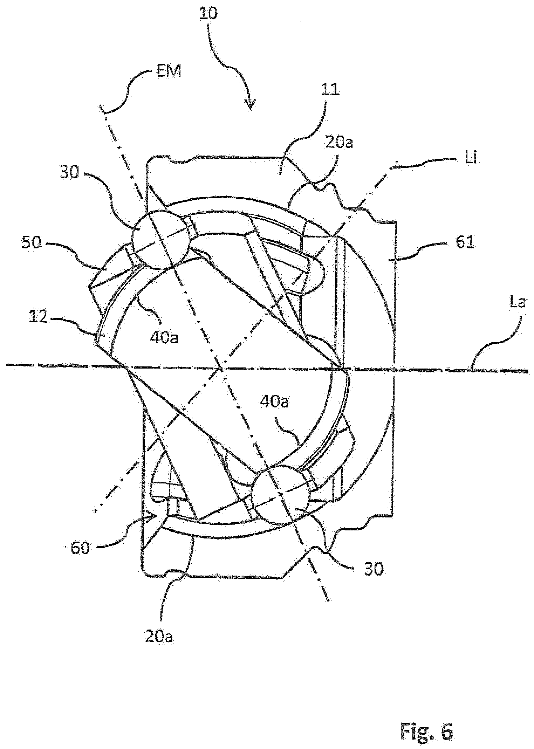

Fig. 4 zeigt ein Gleichlaufdrehgelenk gemäß Fig. 1 in einem abgewinkelten Zustand. Fig. 5 zeigt den Schnittverlauf A-A mittig durch zwei gegenüber liegende neutrale Kugeln 30, während Fig. 6 den Schnittverlauf C-C leicht versetzt durch zwei gegenüber liegende neutrale Kugeln 30 zeigt. Dabei wird deutlich, dass die neutralen Kugeln 30 bei starker Beugung des Gelenks früh freigestellt werden. Dies kann jedoch aufgrund der hohen Anzahl an im Eingriff bleibender Kugeln in Kauf genommen werden.

### Bezugszeichenliste:

- 10: Gleichlaufdrehgelenk
- 11: Gelenkaußenteil
- 12: Gelenkinnenteil
- 13: Achsaufnahme
- 20a,20b: Äußere Kugelbahn
- 30: Kugel, neutral
- 31: Kugel, steuernd
- 40a,40b: Innere Kugelbahn
- 50: Käfig
- 60: Öffnungsseite
- 61: Anschlussseite
- 70: Tangentialer Übergang, Umschlagpunkt

- R1,R1a,R1i: Radius Anschlussseite, Offset
- R2,R2a,R2i: Radius Öffnungsseite, Offset
- R3,R3a,R3i: Radius, konzentrisch

- EM: Gelenkmittelebene
- Li: Längsachse des Gelenkinnenteils
- La: Längsachse des Gelenkaußenteils
- 0: Gelenkmittelpunkt
- OT',OT": Krümmungsmittelpunkt
- X,Xi,Xa: Mittelpunkt
- MS,MN: Mittellinie
- MSi: Innenabschnitt
- MSa: Außenabschnitt
- α,β: Öffnungswinkel

## Patentansprüche

1. Gleichlaufdrehgelenk (10) zur Drehmomentübertragung, aufweisend:
ein Gelenkaußenteil (11) mit mehreren äußeren Kugelbahnen (20a;20b),
ein Gelenkinnenteil (12) mit mehreren inneren Kugelbahnen (40a;40b), drehmomentübertragende Kugeln (30;31), die jeweils in Bahnpaaren aus äußeren Kugelbahnen (20a;20b) und inneren Kugelbahnen (40a;40b) geführt sind, und
einen Käfig (50), der die Kugeln (30;31) in umfangsverteilten Käfigfenstern aufnimmt und bei gestrecktem Gleichlaufdrehgelenk (10) in einer gemeinsamen Gelenkmittelebene (EM) hält,
wobei das Gelenkaußenteil (11) eine Längsachse (La) und axial zueinander entgegengesetzt liegend eine Öffnungsseite (60) und ein Anschlussteil (61) aufweist, und der Weg der Mittelpunkte der Kugeln (30;31) jeweils als Mittellinie (MS;MN) der jeweiligen Kugelbahn definiert ist,
und **dadurch gekennzeichnet, dass**
eine erste Art von Bahnpaaren aus Kugelbahnen (20a;40a) so ausgebildet ist, dass Krümmungsmittelpunkte der Mittellinien (MN) der Kugelbahnen bei gestrecktem Gelenk (10) in der Gelenkmittelebene (EM) liegen, während eine zweite Art von Bahnpaaren aus Kugelbahnen (20b;40b) so ausgebildet ist, dass ihre Mittellinien (MS) wenigstens zwei Abschnitte (MSi;MSa) aufweisen, und die jeweilige Mittellinie (MS) der äußeren Kugelbahnen (20b) der zweiten Art von Bahnpaaren wenigstens einen Innenabschnitt (MSi) und einen Außenabschnitt (MSa) aufweist, wobei der Innenabschnitt (MSi) auf der Anschlussseite (61) des Gelenkaußenteils (11) liegt, während der Außenabschnitt (MSa) auf der Öffnungsseite (60) des Gelenkaußenteils (11) liegt, und der Innenabschnitt (MSi) gekrümmt ist und der Krümmungsmittelpunkt (OT) des Innenabschnitts (MSi) bei gestrecktem Gelenk (10) innerhalb des Hohlvolumens des Gelenkaußenteils (11) zur Öffnungsseite (60) hin versetzt zur Gelenkmittelebene (EM) liegt, während sich die Mittellinie (MS) durch den Außenabschnitt (MSa) zur Öffnungsseite (60) hin aufweitet.

2. Gleichlaufdrehgelenk nach Anspruch 1,
**dadurch gekennzeichnet, dass** sich die Mittellinie (MS) durch den Außenabschnitt (MSa) linear aufweitet.

3. Gleichlaufdrehgelenk nach Anspruch 1,
**dadurch gekennzeichnet, dass** die wenigstens zwei Abschnitte (MSi;MSa) in entgegengesetzte Richtungen gekrümmt sind, und der Krümmungsmittelpunkt (X) des Außenabschnitts (MSa) außerhalb des Hohlvolumens des Gelenkaußenteils (11) liegt.

4. Gleichlaufdrehgelenk nach Anspruch 3,
**dadurch gekennzeichnet, dass** das Verhältnis eines Krümmungsradius (R1) des Innenabschnitts (MSi) zum Durchmesser D_{Kugel} einer zugehörigen Kugel (31) zwischen 1,5 und 2,5 liegt.

5. Gleichlaufdrehgelenk nach Anspruch 3 oder 4,
**dadurch gekennzeichnet, dass** das Verhältnis eines Krümmungsradius (R2) des Außenabschnitts (MSa) zum Durchmesser D_{Kugel} einer zugehörigen Kugel (31) zwischen 1,0 und 10 liegt.

6. Gleichlaufdrehgelenk nach einem der Ansprüche 3 bis 5,
**dadurch gekennzeichnet, dass** der Krümmungsmittelpunkt (Xa) des Au-ßenabschnitts (MSa) zur Öffnungsseite (60) hin versetzt zur Gelenkmittelebene (EM) liegt.

7. Gleichlaufdrehgelenk nach einem der Ansprüche 1 bis 6,
**dadurch gekennzeichnet, dass** das Verhältnis eines Krümmungsradius (R3) der Mittellinien (MN) der ersten Art von Bahnpaaren zum Durchmesser D_{Kugel} einer zugehörigen Kugel (30) zwischen 1,5 und 2,5 liegt.

8. Gleichlaufdrehgelenk nach einem der Ansprüche 1 bis 7,
**dadurch gekennzeichnet, dass** die Abschnitte (MSi;MSa) der Mittellinien (MS) der Kugelbahnen (20b;40b) der zweiten Art von Bahnpaaren weitere Abschnitte aufweisen, die sich an die Abschnitte (MSi;MSa) anschließen.

9. Gleichlaufdrehgelenk nach Anspruch 8,
**dadurch gekennzeichnet, dass** die weiteren Abschnitte linear oder gekrümmt ausgeformt sind.

10. Gleichlaufdrehgelenk nach einem der Ansprüche 1 bis 9,
**dadurch gekennzeichnet, dass** eine gleiche Anzahl von Bahnpaaren beider Arten vorgesehen ist und die Bahnpaare beider Arten abwechseln.

11. Gleichlaufdrehgelenk nach einem der Ansprüche 1 bis 10,
**dadurch gekennzeichnet, dass** die Anzahl von Kugeln wenigstens acht beträgt.

12. Gleichlaufdrehgelenk nach einem der Ansprüche 1 bis 11,
**dadurch gekennzeichnet, dass** die erste Art von Bahnpaaren aus Kugelbahnen (20a;40a) so ausgebildet ist, dass die jeweilige Mittellinie (MN) der äußeren Kugelbahnen (20a) der ersten Art von Bahnpaaren wenigstens einen Innenabschnitt und einen Außenabschnitt aufweist, wobei der Innenabschnitt auf der Anschlussseite (61) des Gelenkaußenteils (11) liegt, während der Außenabschnitt auf der Öffnungsseite (60) des Gelenkaußenteils (11) liegt, und der Krümmungsmittelpunkt des Innenabschnitts in der Gelenkmittelebene (EM) liegt, während der Krümmungsmittelpunkt des Außenabschnitts außerhalb des Gelenkaußenteils (11) liegt.

## Claims

1. Constant-velocity pivot joint (10) for torque transmission, comprising:
a joint outer part (11) having a plurality of outer ball tracks (20a; 20b),
a joint inner part (12) having a plurality of inner ball tracks (40a; 40b),
torque-transmitting balls (30; 31) which are each guided in track pairs of outer ball tracks (20a; 20b) and inner ball tracks (40a; 40b), and
a cage (50) which receives the balls (30; 31) in circumferentially distributed cage windows and holds them in a common joint centre plane (EM) when the constant-velocity pivot joint (10) is in a straight line,
wherein the joint outer part (11) has a longitudinal axis (La) and, situated axially opposite one another, an opening side (60) and a connection part (61), and the path of the centre points of the balls (30; 31) is in each case defined as a centre line (MS; MN) of the respective ball track,
and **characterized in that** a first type of track pairs of ball tracks (20a; 40a) is designed in such a way that centres of curvature of the centre lines (MN) of the ball tracks lie in the joint centre plane (EM) when the joint (10) is in a straight line, while a second type of track pairs of ball tracks (20b; 40b) is designed in such a way that their centre lines (MS) have at least two portions (MSi; MSa), and the respective centre line (MS) of the outer ball tracks (20b) of the second type of track pairs has at least one inner portion (MSi) and one outer portion (MSa), wherein the inner portion (MSi) lies on the connection side (61) of the joint outer part (11), while the outer portion (MSa) lies on the opening side (60) of the joint outer part (11), and the inner portion (MSi) is curved and the centre of curvature (OT') of the inner portion (MSi) lies within the hollow volume of the joint outer part (11) with an offset from the joint centre plane (EM) towards the opening side (60) when the joint (10) is in a straight line, while the centre line (MS) flares out through the outer portion (MSa) towards the opening side (60).

2. Constant-velocity pivot joint according to Claim 1,
**characterized in that** the centre line (MS) flares out linearly through the outer portion (MSa).

3. Constant-velocity pivot joint according to Claim 1,
**characterized in that** the at least two portions (MSi; MSa) are curved in opposite directions, and the centre of curvature (X) of the outer portion (MSa) lies outside the hollow volume of the joint outer part (11).

4. Constant-velocity pivot joint according to Claim 3,
**characterized in that** the ratio of a radius of curvature (R1) of the inner portion (MSi) to the diameter D_{Ball} of an associated ball (31) is between 1.5 and 2.5.

5. Constant-velocity pivot joint according to Claim 3 or 4,
**characterized in that** the ratio of a radius of curvature (R2) of the outer portion (MSa) to the diameter D_{Ball} of an associated ball (31) is between 1.0 and 10.

6. Constant-velocity pivot joint according to one of Claims 3 to 5,
**characterized in that** the centre of curvature (Xa) of the outer portion (MSa) has an offset from the joint centre plane (EM) towards the opening side (60).

7. Constant-velocity pivot joint according to one of Claims 1 to 6,
**characterized in that** the ratio of a radius of curvature (R3) of the centre lines (MN) of the first type of track pairs to the diameter D_{Ball} of an associated ball (30) is between 1.5 and 2.5.

8. Constant-velocity pivot joint according to one of Claims 1 to 7,
**characterized in that** the portions (MSi; MSa) of the centre lines (MS) of the ball tracks (20b; 40b) of the second type of track pairs have further portions which adjoin the portions (MSi; MSa).

9. Constant-velocity pivot joint according to Claim 8,
**characterized in that** the further portions have a linear or curved form.

10. Constant-velocity pivot joint according to one of Claims 1 to 9,
**characterized in that** the same number of track pairs of both types is provided and the track pairs of both types alternate.

11. Constant-velocity pivot joint according to one of Claims 1 to 10,
**characterized in that** the number of balls is at least eight.

12. Constant-velocity pivot joint according to one of Claims 1 to 11,
**characterized in that** the first type of track pairs of ball tracks (20a; 40a) is designed in such a way that the respective centre line (MN) of the outer ball tracks (20a) of the first type of track pairs has at least one inner portion and one outer portion, wherein the inner portion lies on the connection side (61) of the joint outer part (11), while the outer portion lies on the opening side (60) of the joint outer part (11), and the centre of curvature of the inner portion lies in the joint centre plane (EM), while the centre of curvature of the outer portion lies outside the joint outer part (11).

## Revendications

1. Joint homocinétique (10) servant à la transmission de couple, présentant :
une partie extérieure de joint (11) dotée de plusieurs chemins de roulement à billes extérieurs (20a ; 20b),
une partie intérieure de joint (12) dotée de plusieurs chemins de roulement à billes intérieurs (40a ; 40b),
des billes (30 ; 31) transmettant un couple, qui sont guidées respectivement dans des paires de chemins de roulement à billes extérieurs (20a ; 20b) et de chemins de roulement à billes intérieurs (40a ; 40b), et
une cage (50), qui reçoit les billes (30 ; 31) dans des fenêtres de cage réparties circonférentiellement et les maintient dans un plan central de joint (EM) commun lorsque le joint homocinétique (10) est étendu,
la partie extérieure de joint (11) présentant un axe longitudinal (La) et un côté d'ouverture (60) et une partie de raccordement (61) situés de manière axialement opposée l'un à l'autre, et le trajet des centres des billes (30 ; 31) étant défini respectivement comme ligne centrale (MS ; MN) du chemin de roulement à billes respectif,
et **caractérisé en ce**
**qu'**un premier type de paires de chemins de roulement à billes (20a ; 40a) est réalisé de telle sorte que les centres de courbure des lignes centrales (MN) des chemins de roulement à billes se situent dans le plan central de joint (EM) lorsque le joint (10) est étendu, tandis qu'un deuxième type de paires de chemins de roulement à billes (20b ; 40b) est réalisé de telle sorte que leurs lignes centrales (MS) présentent au moins deux portions (MSi ; MSa), et la ligne centrale (MS) respective des chemins de roulement à billes extérieurs (20b) du deuxième type de paires de chemins de roulement présente au moins une portion intérieure (MSi) et une portion extérieure (MSa), la portion intérieure (MSi) se situant sur le côté de raccordement (61) de la partie extérieure de joint (11), tandis que la portion extérieure (MSa) se situe sur le côté d'ouverture (60) de la partie extérieure de joint (11), et la portion intérieure (MSi) étant courbée et le centre de courbure (OT) de la portion intérieure (MSi), lorsque le joint (10) est étendu, étant situé à l'intérieur du volume creux de la partie extérieure de joint (11) de manière décalée vers le côté d'ouverture (60) par rapport au plan central de joint (EM), tandis que la ligne centrale (MS) s'élargit à travers la portion extérieure (MSa) vers le côté d'ouverture (60).

2. Joint homocinétique selon la revendication 1,
**caractérisé en ce que** la ligne centrale (MS) s'élargit de manière linéaire à travers la portion extérieure (MSa).

3. Joint homocinétique selon la revendication 1,
**caractérisé en ce que** les au moins deux portions (MSi ; MSa) sont courbées dans des directions opposées, et le centre de courbure (X) de la portion extérieure (MSa) se situe à l'extérieur du volume creux de la partie extérieure de joint (11).

4. Joint homocinétique selon la revendication 3,
**caractérisé en ce que** le rapport d'un rayon de courbure (R1) de la portion intérieure (MSi) au diamètre D_{Kugel} d'une bille (31) associée se situe entre 1,5 et 2,5.

5. Joint homocinétique selon la revendication 3 ou 4,
**caractérisé en ce que** le rapport d'un rayon de courbure (R2) de la portion extérieure (MSa) au diamètre D_{Kugel} d'une bille (31) associée se situe entre 1,0 et 10.

6. Joint homocinétique selon l'une des revendications 3 à 5,
**caractérisé en ce que** le centre de courbure (Xa) de la portion extérieure (MSa) se situe de manière décalée vers le côté d'ouverture (60) par rapport au plan central de joint (EM).

7. Joint homocinétique selon l'une des revendications 1 à 6,
**caractérisé en ce que** le rapport d'un rayon de courbure (R3) des lignes centrales (MN) du premier type de paires de chemins de roulement au diamètre D_{Kugel} d'une bille (30) associée se situe entre 1,5 et 2,5.

8. Joint homocinétique selon l'une des revendications 1 à 7,
**caractérisé en ce que** les portions (MSi ; MSa) des lignes centrales (MS) des chemins de roulement à billes (20b ; 40b) du deuxième type de paires de chemins de roulement présentent d'autres portions qui se raccordent aux portions (MSi ; MSa).

9. Joint homocinétique selon la revendication 8,
**caractérisé en ce que** les autres portions sont formées de manière linéaire ou courbée.

10. Joint homocinétique selon l'une des revendications 1 à 9,
**caractérisé en ce qu'**un même nombre de paires de chemins de roulement des deux types est prévu et les paires de chemins de roulement des deux types alternent.

11. Joint homocinétique selon l'une des revendications 1 à 10,
**caractérisé en ce que** le nombre de billes vaut au moins huit.

12. Joint homocinétique selon l'une des revendications 1 à 11,
**caractérisé en ce que** le premier type de paires de chemins de roulement à billes (20a ; 40a) est réalisé de telle sorte que la ligne centrale (MN) respective des chemins de roulement à billes extérieurs (20a) du premier type de paires de chemins de roulement présente au moins une portion intérieure et une portion extérieure, la portion intérieure se situant sur le côté de raccordement (61) de la partie extérieure de joint (11), tandis que la portion extérieure se situe sur le côté d'ouverture (60) de la partie extérieure de joint (11), et le centre de courbure de la portion intérieure se situant dans le plan central de joint (EM), tandis que le centre de courbure de la portion extérieure se situe à l'extérieur de la partie extérieure de joint (11).
